# FASCICULE DE BREVET EUROPEEN

(11) **EP 1 305 147 B1**
(45) Date de publication et mention de la délivrance du brevet: **29.12.2004**
(21) Numéro de dépôt: 00958705.6
(22) Date de dépôt: 18.08.2000
(51) Int. Cl.: B26D 1/00

(54) **PROCEDE ET DISPOSITIF DE RECYCLAGE DE PNEUS**
VERFAHREN SOWIE VORRICHTUNG ZUR WIEDERVERWENDUNG VON REIFEN
METHOD AND DEVICE FOR RECYCLING TYRES

(30) Priorité: 08.09.1999 FR 9911392; 21.07.2000 FR 0009855; 21.07.2000 FR 0009857
(43) Date de publication de la demande: 02.05.2003
(73) Titulaire: Recyclage et Technologie, Saint Helier, Jersey (GB)
(72) Inventeur: LAMBERT, Serge, F-77640 Jouars (FR); PRIOUL, Loic, F-35560 Saint Remy du Plain (FR)
(74) Mandataire: Thibon-Littaye, Annick
(86) Numéro de dépôt international: PCT/FR2000/002340
(87) Numéro de publication internationale: WO 2001/017733

(56) Documents cités:
- EP-A- 0 480 118
- WO-A-92/15438
- DE-A- 19 740 413
- DE-A- 19 818 566
- FR-A- 2 738 177
- US-A- 5 482 215
- US-A- 5 683 038

## Description

La présente invention concerne le recyclage des pneus de grandes dimensions, tels que les pneus d'engins agricoles ou de travaux publics ou les pneus d'avions.

A cet effet, pour récupérer en particulier la gomme de caoutchouc de bonne qualité, on découpe tout d'abord les pneus pour séparer la bande de roulement des flancs. Cette opération de découpe de la bande de roulement est difficile à réaliser car il faut découper une large bande de caoutchouc dans laquelle est noyée l'armature de pneu qui comporte fréquemment une carcasse radiale métallique. Pour cette opération, on a envisagé l'usage de jets d'eau à haute pression contenant des fines particules de matière abrasive pour découper l'armature. Pour obtenir une découpe satisfaisante, il serait nécessaire de procéder à ces opération avec des pressions extrêmement élevées de l'ordre de 4000 bars, ce qui entraîne l'utilisation de machines très coûteuses.

La découpe étant réalisée en partant de l'extérieur du pneu, le jet d'eau doit d'abord découper une épaisseur importante de caoutchouc si bien qu'il a perdu beaucoup de sa puissance lorsqu'il arrive sur l'armature qui ne peut donc pas être découpée de manière satisfaisante.

Enfin, cette technique de découpe crée un bruit extrêmement fort de l'ordre de 160 dB et il est donc nécessaire de prévoir des dispositifs d'insonorisation très coûteux.

Lorsque l'on doit recycler des pneus neufs mis au rebut de fabrication, l'épaisseur du pneu à découper est extrêmement importante et dépasse les limites de la découpe à jet d'eau à pression élevée.

Pour augmenter l'efficacité de la découpe, il est nécessaire de disposer la buse de projection très près de la surface du pneu à découper, la distance optimale étant de l'ordre de 2 mm mais, lorsque la buse est trop proche de la surface du pneu à découper, elle risque d'être endommagée par des irrégularités de surface du pneu, ce qui entraîne des arrêts de fonctionnement et augmente le coût de l'opération de recyclage.

C'est pourquoi on considère qu'il n'est pas possible de réaliser de manière économique et fiable la découpe de pneus de grandes dimensions par des jets d'eau à haute pression.

Un autre problème lié au recyclage de pneus de grandes dimensions est le coût de leur transport jusqu'à l'unité de retraitement. En effet, les pneus d'engins agricoles ou de travaux publics ou les pneus d'avions ont généralement des dimensions très importantes, ce qui interdit leur transport en position horizontale puisque leur diamètre est supérieur à la largeur autorisée pour les transports routiers, même exceptionnels, ferroviaires ou autres. Par conséquent, on ne peut transporter qu'un faible nombre de pneus par véhicule de transport ce qui entraîne un surcoût important pour le recyclage des pneus.

La présente invention a pour objet un procédé de recyclage des pneus qui présente une solution technique aux inconvénients précités.

Par ailleurs, pendant les premières étapes de ce recyclage, on récupère des gommes de caoutchouc de qualités différentes en réalisant des découpes en épaisseur le long de la bande de roulement et des flancs du pneu. Le résidu de ces traitements de "tranchage" ou de "scalpage" sont des morceaux ou des bandes de caoutchouc armé, d'épaisseur relativement faible et contenant des tronçons d'armature en métal et/ou en matière synthétique. Pour améliorer le rendement de ce recyclage, il est désirable de récupérer le caoutchouc dans lequel sont enrobés les éléments d'armature, caoutchouc qui est de bonne qualité, mais ce caoutchouc récupéré doit être exempt d'impuretés si l'on désire le recycler, en particulier, pour la fabrication de nouveaux articles en caoutchouc.

Actuellement, on découpe les déchets en caoutchouc armé en petits morceaux de quelques centimètres que l'on soumet ensuite à une opération de broyage pour séparer le caoutchouc des morceaux d'armature. Ce procédé ne permet pas d'obtenir du caoutchouc sans impureté, en particulier, le caoutchouc récupéré contient des impuretés métalliques qui ne peuvent être éliminées facilement. Or, les utilisateurs de ce caoutchouc recyclé exigent que la poudrette fournie soit exempte de toute impureté.

Pour obtenir du caoutchouc exempt d'impuretés, il a été proposé de soumettre les morceaux de pneu armé à une opération de cryogénisation à une température comprise environ entre - 80 °C et - 100 °C. On obtient alors une poudre sans impureté, mais les qualités mécaniques et physiques, telles que la résistance au vieillissement, sont altérées et on obtient donc un caoutchouc de qualité médiocre.

Le procédé de l'invention selon la revendication 1 est notamment remarquable en ce que la découpe de la bande de roulement est effectuée à partir de l'intérieur du pneu selon une direction radiale et dans un milieu liquide tel que de l'eau.

Du fait que l'on découpe à partir de l'intérieur du pneu, l'épaisseur de gomme de caoutchouc devant être découpée avant l'armature du pneu est relativement faible et la puissance du jet d'eau est encore très forte quand elle parvient sur l'armature, qui peut donc alors être découpée de manière efficace, même dans le cas d'armatures métalliques.

Le fait de découper selon une direction radiale permet de limiter l'épaisseur de caoutchouc à découper, en particulier dans le cas où les flancs du pneu sont bombés.

Enfin, lorsque l'on opère dans un milieu liquide, le bruit est réduit à une valeur supportable, généralement de 80 dB.

Selon une autre caractéristique de l'invention, on découpe préalablement les deux bords de la bande de roulement de manière à réaliser une sorte de chanfrein.

De cette manière, on peut réduire l'épaisseur de caoutchouc à découper à une valeur minimale, ce qui réduit notablement le temps nécessaire pour la découpe radiale de la bande de roulement.

Avantageusement, avant la découpe de la bande de roulement, on réalise au moins une coupe transversale de cette dernière au moyen d'une buse transversale mobile de projection d'eau à haute pression travaillant en milieu liquide, disposée à l'intérieur du pneu et se déplaçant selon une direction parallèle à l'axe du pneu.

Par ce procédé de découpe, on réduit considérablement l'encombrement de la bande de roulement qui vient d'être découpée puisqu'elle peut être transportée à plat, les deux flancs étant transportés verticalement les uns contre les autres, de telle sorte que l'on peut transporter un plus grand nombre de pneus dans un même volume.

Pour améliorer encore les conditions de transport et augmenter le nombre de pneus usagés pouvant être transportés, la bande de roulement est découpée transversalement en tronçons.

Selon une autre caractéristique de l'invention, les buses radiales sont supportées par un support de guidage maintenu en appui sur la surface intérieure du pneu et circulant sur celle-ci de telle manière que les buses radiales sont maintenues à une faible distance prédéterminée de ladite surface intérieure de la bande de roulement.

Le support de guidage peut, par exemple, comporter une mollette roulant sur l'intérieur du pneu. De cette manière, la buse de découpe radiale suit le profil intérieur du pneu et ne risque pas d'être endommagée par des irrégularités de la surface intérieure de la bande de roulement telles que des emplâtres par exemple.

Avantageusement, les buses radiales de découpe sont maintenues à une distance comprise entre 2 et 5 mm, ce qui permet d'obtenir une découpe efficace sans craindre d'endommager la buse de découpe.

L'invention permet de découper des pneus de grandes dimensions en obtenant des sections de pneus, bandes de roulement et flancs qui occupent un volume beaucoup plus réduit que le pneu lui-même. De ce fait, les opérations de découpe précitées sont réalisées sur un site de stockage de pneus usagés ou au rebut par une unité mobile et les sections de pneus obtenues sont transportées à faible coût vers une unité fixe de recyclage dans laquelle on récupère, en particulier, la gomme de la bande de roulement et des flancs.

Selon encore une autre caractéristique de l'invention, on réalise une découpe en épaisseur de la partie de la bande de roulement du côté extérieur à l'armature et l'épaisseur de cette découpe est déterminée par une détection de la position de l'armature métallique disposée le plus à l'extérieur du pneu dans la bande de roulement.

Cette technique permet de récupérer une épaisseur optimale de la gomme de la face extérieure de la bande de roulement quel que soit le degré d'usure de cette dernière.

On peut ainsi, par exemple, récupérer la gomme de roulement jusqu'à 3 mm de l'armature métallique extérieure du pneu dans la bande de roulement.

Pour la récupération de la gomme des flancs du pneu, chaque flanc est entraîné en rotation autour de son axe au moyen d'une pièce circulaire fixée sur le talon du pneu et on réalise une découpe en épaisseur du flanc au moyen d'un outil de coupe se déplaçant radialement de manière à réaliser une découpe en profondeur selon une spirale.

De cette manière, on peut réaliser la récupération de la gomme des flancs de pneu en une seule opération quelle que soit la largeur de ces derniers.

Après la découpe en épaisseur des flancs, on maintient le flan dans la pièce circulaire d'entraînement et on découpe le talon au voisinage immédiat de la tringle du pneu. La découpe est avantageusement réalisée du côté opposé au bord du talon pour couper à un endroit où les brins de l'armature qui entourent la tringle sont le plus écartés l'un de l'autre et on extrait cette dernière au moyen d'un crochet.

Cette disposition permet de récupérer les deux tringles du pneu en les conservant dans leur intégralité et avec une faible déformation. Ces tringles peuvent être alors recyclées dans la métallurgie en tant qu'acier de haute qualité.

Selon la revendication 11, l'invention a également pour objet un dispositif pour la mise en oeuvre du procédé précité. Par rapport à l'art antérieur illustré par le document DE 19740413, il est notamment remarquable en ce qu'il comporte une cuve qui est remplie d'un liquide et au-dessus de laquelle le pneu est fixé verticalement, d'un côté au moyen d'une pièce circulaire rotative fixée sur l'un des talons du pneu et entraînant le pneu en rotation autour de son axe et, de l'autre côté, au moyen d'une pièce fixe sur laquelle circule l'autre talon de pneu et qui présente au moins une ouverture pour le passage des conduites d'alimentation et de commande des buses de découpe disposées à l'intérieur de la partie immergée du pneu. Le niveau de remplissage du liquide est tel que la partie de l'épaisseur de la bande de roulement présente dans la cuve est totalement immergée

Avantageusement, la pièce fixe est constituée par au moins trois bras radiaux de longueur réglable portant chacun une roulette engagée sur le talon du pneu.

La pièce circulaire rotative est adaptée au diamètre de l'ouverture de réception de la jante du pneu et elle est utilisée pour manipuler ce dernier. Elle est changée lorsque l'on passe à une autre série de pneus ayant un diamètre de jante différent. La pièce fixe avec ses bras de longueur réglable est réglée à chaque fois au diamètre de l'ouverture de la jante.

Avantageusement, on prévoit un disque rotatif de fin de découpe ou d'ébavurage qui est disposé à l'extérieur de la bande de roulement en aval de la buse radiale et au voisinage de cette dernière. Ce disque rotatif de fin de découpe assure la séparation de la bande de roulement des flancs dans le cas où la découpe au moyen de la buse radiale n'est pas parfaitement réalisée sur l'extérieur de la bande de roulement.

Ce dispositif de découpe de la bande de roulement est monté sur une unité mobile qui comprend un dispositif de traitement des boues pour le recyclage de l'eau notamment en vue de son utilisation pour la découpe en tronçons de la bande de roulement.

L'eau étant recyclée, cette unité mobile a une grande autonomie et peut être utilisée dans des endroits où il n'existe pas d'approvisionnement en eau. Les boues obtenues sont conservées et traitées dans une unité fixe où l'on complète le traitement afin d'obtenir de la poudrette de caoutchouc de différentes granulométries à partir des flancs et de la bande de roulement. Il en résulte que l'unité mobile n'a aucune influence dommageable sur l'environnement.

L'invention a également pour objet un procédé qui permet de récupérer le caoutchouc sans aucune impureté tout en lui conservant ses qualités mécaniques et physiques.

Ce procédé, aussi selon la revendication 1, est notamment remarquable en ce qu'il comprend une additionellement étape de pulvérisation des morceaux de pneu par des jets d'eau à haute pression chargés de grains de matière abrasive très fins au-dessus d'un bac contenant un liquide, tel que de l'eau, de manière à obtenir des particules de caoutchouc de dimensions inférieures ou égales à 12 micromètres et une étape de tri par flottation des particules de caoutchouc obtenues en récupérant les particules exemptes d'impuretés qui flottent sur le liquide. On réalise ainsi une micronisation, c'est-à-dire une réduction du caoutchouc en particules très fines.

Le fait que les particules de caoutchouc obtenues aient des dimensions inférieures ou égales à 12 micromètres permet d'assurer une efficacité totale du tri par flottation, seules les particules de caoutchouc exemptes d'impuretés flottant sur le liquide alors que les particules auxquelles adhère une impureté, par exemple métallique, tombent au fond du bac, du fait de leur plus grande densité.

Avantageusement, la pression des jets d'eau est comprise entre 1500 et 2500 bars et les grains de matière abrasive ont des dimensions inférieures ou égales à 7 micromètres.

Dans le cas de morceaux de pneu ne contenant que des résidus d'armature en matière synthétique, la pression de l'eau est comprise entre 2000 et 2100 bars et la dimension des grains de matière abrasive est d'environ 5 micromètres.

Dans le cas où les morceaux de pneu armé comportent des résidus d'armature métallique, la pression de l'eau est avantageusement d'environ 1800 bars et la dimension des grains de matière abrasive est d'environ 7 micromètres. L'utilisation d'une pression plus faible permet d'éviter que ce traitement de micronisation n'attaque les morceaux d'armature métallique.

L'invention a également pour objet un dispositif pour la mise en oeuvre du procédé qui vient d'être défini.

Ce dispositif aussi, selon la revendication 11 est notamment remarquable en ce qu'il est additionellement constitué d'une enceinte en forme de cloche, d'un rotor annulaire muni d'aubes à sa partie supérieure et monté à rotation de manière étanche dans la partie inférieure ouverte de l'enceinte et d'un élément diffuseur en forme de disque qui est fixé à l'intérieur de la partie inférieure du rotor et qui comporte une pluralité de trous de très faible diamètre et en ce que l'enceinte est alimentée en eau sous très haute pression à sa partie supérieure fermée de telle sorte que le rotor constitue une turbine entraînant l'élément diffuseur en rotation à très grande vitesse et que l'eau est projetée par les trous de l'élément diffuseur sous forme de jets très fins à haute pression.

On prévoit un mouvement relatif entre le morceau de pneu et le dispositif diffuseur, par exemple en déplaçant le diffuseur au dessus du morceau de pneu de manière à balayer progressivement toute la surface du morceau de pneu avec le diffuseur. Du fait de la rotation du diffuseur, l'action de pulvérisation, ou micronisation, est très efficace et la totalité de la surface du pneu est soumise à l'action de jets d'eau à haute pression.

Avantageusement, le rotor est monté dans l'enceinte par l'intermédiaire d'un palier hydraulique. Ceci permet de réaliser la sustentation du rotor avec très peu de frottements.

Avantageusement, la paroi interne de la partie inférieure de l'enceinte et la face interne du rotor présentent des profils crénelés complémentaires délimitant un canal alimenté en un liquide, tel que de l'eau, sous haute pression .

Selon une autre caractéristique de l'invention, les aubes du rotor comportent une partie en forme de cuiller. Ceci permet d'augmenter la vitesse de rotation du rotor.

Avantageusement, le diamètre des trous de l'élément diffuseur est inférieur à 0,1 mm. Ceci permet d'obtenir une très faible granulométrie des particules de caoutchouc.

Selon un mode de l'invention, l'enceinte comporte deux joints annulaires à lèvres en contact avec le rotor et disposés de part et d'autre du palier hydraulique. Avantageusement, on utilise des joints métalloplastiques. Ceci assure une bonne étanchéité du palier hydraulique par rapport à l'enceinte.

Avantageusement, l'élément diffuseur est fixé de manière amovible dans le rotor, par exemple par vissage. Ceci facilite les opérations de maintenance en permettant de démonter seulement l'élément diffuseur, pour le nettoyer ou le changer.

Avantageusement, les trous de l'élément diffuseur sont évasés à leur extrémité interne.

L'invention sera maintenant plus complètement décrite dans le cadre d'un exemple de réalisation reprenant des caractéristiques préférées et de leurs avantages, en faisant référence aux figures des dessins annexés qui les illustrent et dans lesquelles :
- la figure 1 représente en coupe un pneu neuf avec les différentes découpes qui y sont réalisées ;
- la figure 2 est une vue de détail de la figure 1 illustrant la découpe des bords de la bande de roulement ;
- la figure 3 est une vue schématique en coupe du dispositif de découpe ;
- la figure 4 est une vue en perspective du dispositif de découpe ;
- la figure 5 illustre la découpe transversale de la bande de roulement ;
- la figure 6 illustre la découpe de la bande de roulement par les buses radiales ;
- la figure 7 est une vue de détail montrant une buse radiale ;
- la figure 8 représente en coupe un dispositif de découpe en épaisseur de la bande de roulement ;
- la figure 9 représente, en coupe, la fixation d'un flanc en vue de sa découpe en épaisseur ;
- la figure 10 est une vue de détail de la figure 9 ;
- les figures 11 et 12 illustrent l'opération d'arrachage de la tringle ;
- la figure 13 est un organigramme montrant les différentes opérations du recyclage des pneus et leurs résultats :
- la figure 14 est une vue en coupe de côté qui représente, de manière schématique, un dispositif de micronisation de morceaux de pneu armé ; et
- la figure 15 est une vue de dessus du rotor et de l'élément diffuseur.

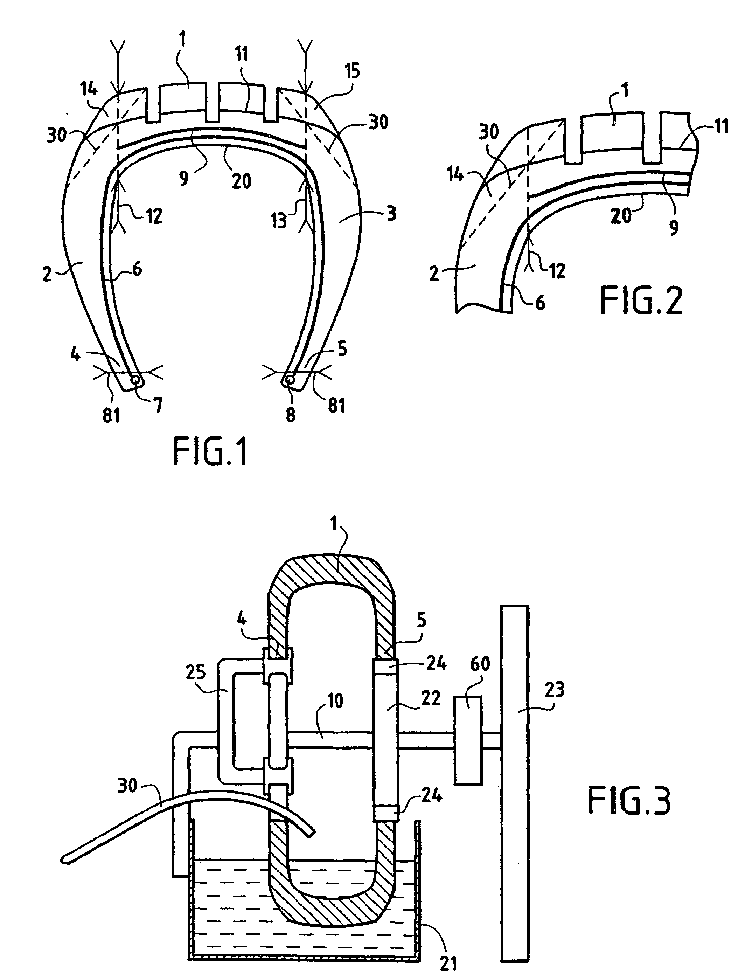

On a représenté sur la figure 1, en coupe transversale, un pneu qui comporte une bande de roulement 1 raccordée à deux flancs 2 et 3 qui se terminent par un talon 4 et 5. Dans la majorité des cas, les pneus comportent une armature constituée par une carcasse radiale 6 qui est accrochée sur deux tringles 7 et 8 qui sont disposées dans les talons 4 et 5. Cette carcasse s'étend sur toute la longueur des deux flancs 2 et 3 et de la bande de roulement 1. Elle est plus épaisse dans la bande roulement et comporte plusieurs plis en métal et/ou en matière synthétique, le pli le plus extérieur étant métallique. L'armature peut être complétée par une ceinture 9 qui est simplement noyée dans la bande de roulement 1 vers l'extérieur par rapport à la carcasse radiale 6 et qui comporte un dispositif de sécurité qui avertit, lorsque l'on veut rechaper le pneu, que l'armature est proche et que le pneu doit être mis au rebut.

On a représenté sur la figure 1, un pneu neuf dont la bande de roulement 1 est très épaisse. En effet, il est possible qu'il soit nécessaire de recycler des pneus neufs, par exemple des pneus qui ont été envoyés au rebut lors de la fabrication ou des pneus très peu usés ayant subi des dommages non réparables. On a représenté en 11 le profil d'un pneu usagé dont la bande de roulement est moins épaisse.

Pour procéder au recyclage de ce pneu, on commence par le découper en trois morceaux distincts à savoir, la bande de roulement 1 et des deux flancs 2 et 3 sur lesquels on effectuera ensuite des opérations de récupération de gomme de caoutchouc de différentes qualités. Conformément à l'invention, on découpe la bande de roulement sur ses deux côtés selon une direction radiale 12, 13, et ces deux découpes selon les lignes 12 et 13 sont obtenues au moyen d'un jet d'eau à haute pression chargé de fines particules d'une matière abrasive. Cette opération de découpe radiale est réalisée en attaquant le pneu par la surface intérieure de la bande de roulement 11 de telle sorte que le jet d'eau à haute pression n'a qu'une faible partie de caoutchouc à découper avant d'arriver sur les armatures 6 et 9.

Comme on peut le voir sur la figure 1, l'épaisseur de la bande de roulement à découper est nettement plus élevée dans le cas d'un pneu neuf que dans le cas d'un pneu usagé, ce qui entraînerait l'utilisation d'une machine fournissant une pression très élevée et augmenterait notablement le coût de l'opération.

C'est pourquoi, avant de réaliser les découpes radiales 12 et 13, dans le cas d'un pneu ayant une épaisseur de gomme très importante, on réalise tout d'abord une découpe des bords 14 et 15 de la bande de roulement 1, cette découpe 30 s'effectuant selon une direction oblique, par exemple selon un angle d'environ 30 °, de manière à réaliser une sorte de chanfrein sur la bande de roulement. On voit que cette opération, qui s'effectue aisément puisqu'il ne s'agit que de découper une épaisseur réduite de la gomme de caoutchouc sans armature, permet d'obtenir, dans le cas d'un pneu neuf ou peu usagé, une longueur de découpe pour les découpes radiales 12 et 13 qui est sensiblement la même que dans le cas d'un pneu usagé. Ceci est illustré en détail sur la vue partielle de la figure 2. Cette découpe est avantageusement réalisée au moyen d'une lame vibrante devant laquelle le pneu se déplace en rotation autour de son axe ou par sciage. Cette opération peut également être réalisée sur tous les pneus, car cela facilite l'opération de découpe de la bande de roulement qui s'effectue alors plus rapidement et sans bavures.

En particulier, on peut réduire très fortement l'épaisseur de gomme à couper lors de la découpe radiale de la bande de roulement. Ainsi, on peut réduire l'épaisseur de la gomme à découper de 600 à 100 mm de telle sorte que la découpe radiale se fait essentiellement sur l'armature. On peut aussi diviser par 6, la durée de la découpe radiale.

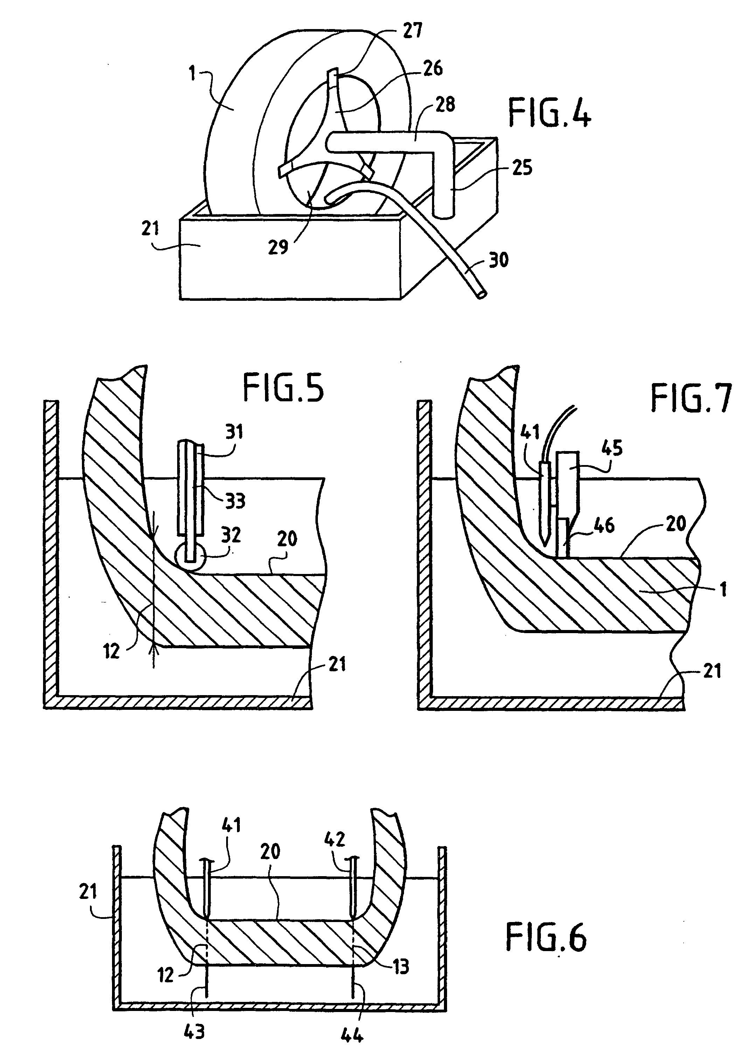

On a représenté sur les figures 3 et 4, de manière schématique, un dispositif destiné à réaliser la découpe de la bande de roulement. Ce dispositif comporte essentiellement une cuve 21 qui contient de l'eau et dont les dimensions sont telles qu'elle peut recevoir un pneu de grandes dimensions tel qu'un pneu d'engin agricole ou de travaux publics. La cuve contient un volume d'eau tel que la partie de la bande de roulement située dans la cuve est totalement immergée. Une pièce circulaire rotative 22 est fixée sur un des talons 5. Cette pièce support 22 est disposée verticalement et montée en rotation sur un montant vertical 23, la hauteur de la pièce 22 pouvant être réglée, par exemple, par des moyens hydrauliques de manière à ce que l'épaisseur de la bande de roulement en bas du pneu soit toujours dans la cuve 21. Le montant 23 comporte également des moyens d'entraînement, tels qu'un moteur hydraulique associé à un moto-réducteur 60, qui entraînent la pièce 22 en rotation autour de son axe. La pièce rotative 22 est fixée sur le talon 5 du pneu par exemple, au moyen d'un anneau extérieur 24. Cet anneau est adapté au diamètre de l'ouverture de réception de la jante du pneu et peut être interchangé avec d'autres anneaux adaptés à d'autres diamètres de jante lorsque l'on veut traiter des pneus ayant un diamètre de jante différent.

De l'autre côté du pneu, on prévoit une pièce fixe 25 qui est par exemple fixée sur la cuve 21 et sur laquelle circule le deuxième talon 4 du pneu lorsque le pneu est entraîné en rotation par la pièce rotative 22.

Comme on peut le voir sur la figure 4, cette pièce fixe 25 peut comporter trois bras 26 dont l'extrémité libre porte une roulette 27 qui roule sur le talon 4. Les trois bras 26 ont une longueur réglable et sont montés sur un bras support 28 réglable en hauteur. Les trois bras 26 déterminent trois ouvertures de passage 29 permettant d'accéder à l'intérieur du pneu. Les différentes conduites d'alimentation et de commandes des outils de découpe se trouvant dans le pneu passent par l'une de ces ouvertures 29 ; en particulier parmi ces conduites 30 se trouve une conduite d'alimentation en eau de l'intérieur du pneu.

Avantageusement, la pièce fixe 25 est montée à rotation libre, par exempte au moyen d'une bague en "Téflon", sur un arbre 10 solidaire de la pièce rotative 22 et coaxial avec celle-ci. Pour faciliter les opérations de mise en place du pneu à traiter, cet arbre est fixé et solidarisé avec la pièce rotative 22 au moyen de cannelures, ce qui permet un démontage rapide.

Conformément à l'invention, préalablement à la découpe radiale de la bande de roulement 1, on réalise une découpe transversale de cette bande de roulement 1 au moyen d'un jet d'eau à haute pression. Ceci est illustré sur la figure 5 où l'on voit un tronçon de la section d'un pneu dans laquelle on effectuera ensuite la découpe radiale 12. On voit sur cette figure 5 un support 31 vertical disposé à l'intérieur du pneu partiellement dans sa partie immergée. Ce support 31 comporte une roulette 32 à son extrémité et est en appui contre la surface intérieure 20 de la bande de roulement 1. Une buse de projection d'eau à haute pression 33 est portée par le support 31, son axe étant aligné avec l'axe de la roulette 32 dans un plan radial du pneu.

La découpe transversale de la bande de roulement 1 est réalisée en faisant circuler le support 31 le long de la surface intérieure 20 de la bande de roulement 1 de la ligne de découpe 12 jusqu'à la ligne de découpe 13. L'utilisation du support 31 en appui sur la surface intérieure 20 permet de maintenir la buse de projection 33 à une distance constante par rapport à la surface intérieure 20, en particulier lorsque celle-ci présente une courbure accentuée sur ses côtés.

Avantageusement, la bande de roulement est découpée en tronçons de 2 m de longueur par exemple afin de faciliter son transport. A cet effet, on réalise plusieurs découpes transversales en faisant tourner le pneu pour l'amener à des positions angulaires prédéterminées où l'on réalise une découpe transversale.

Les figures 6 et 7 illustrent, de manière schématique, la découpe radiale de la bande de roulement 1. Ceci est réalisé, comme représenté de manière schématique sur la figure 6, au moyen de deux buses radiales 41 et 42 de projection d'eau sous haute pression qui sont disposées verticalement à l'intérieur du pneu dans la partie immergée de celui-ci de telle manière que les buses radiales 41 et 42 travaillent dans l'eau se trouvant dans la cuve 21. Ces deux buses radiales 41 et 42 sont disposées dans un même plan radial au regard des lignes de découpe 12 et 13 ; ces deux buses 41 et 42 sont fixes et l'opération de découpe radiale est réalisée en faisant tourner le pneu au moyen de la pièce rotative 22. Du fait que la bande de roulement a été préalablement découpée dans la direction transversale comme indiqué ci-dessus, la bande de roulement se déroule lorsqu'elle est découpée radialement.

Afin d'assurer que la bande de roulement 1 se détache bien des flancs 2 et 3, on dispose, de préférence dans la cuve 21 en aval des buses 41 et 42, un disque rotatif d'ébavurage 43, respectivement 44, qui est disposé sur la face extérieure de la bande de roulement 1 en regard des lignes de découpe 12 respectivement 13. Ces disques rotatifs 43 et 44 découpent les bavures extérieures éventuellement laissées par les buses radiales 41 et 42, ce qui assure une découpe parfaite de la bande de roulement. De cette manière, on assure que la bande de roulement 1 se détache bien des flancs 2 et 3 une fois qu'elle a été découpée radialement et cela au voisinage des buses radiales 41 et 42 dans la cuve 21.

Une table à rouleaux fous, non représentée, est disposée sous le pneu dans la cuve 21 et déborde de celle-ci pour recevoir les tronçons de bande de roulement qui se détachent des flancs.

Sur la figure 7 on a représenté, en détail, la buse 41 qui est portée par un support 45 de manière analogue à la buse transversale 33 sur le support 31, le support 45 comportant une mollette 46 à son extrémité et étant maintenu en appui sur la face intérieure 20 de la bande de roulement 1. La buse 41 est disposée à côté de la mollette 46 qui assure un guidage tel que l'extrémité de la buse 41 reste à une distance prédéterminée constante de la face intérieure 20 de la bande de roulement 1. La distance idéale pour obtenir la meilleure efficacité de découpe est de 2 mm, toutefois, pour éviter que l'extrémité de la buse ne soit détériorée par des petites aspérités de la face intérieure 20, la buse 41 est maintenue à une distance de 5 mm. Le support 46 guide la buse 41 de telle manière qu'elle suit exactement le profil de la face intérieure 20 qui peut comporter des irrégularités de surface relativement importantes, par exemple des emplâtres.

Le dispositif de découpe qui vient d'être décrit est monté sur une unité mobile telle qu'un plateau de camion qui se déplace jusqu'à des sites de stockage de pneus usagés ou mis au rebut. Les opérations de découpe décrites plus haut fournissent des éléments plats à savoir des tronçons de bandes de roulement et des flancs 2 et 3 qui peuvent ensuite être facilement transportés en grande quantité du fait qu'ils occupent un faible volume par rapport aux pneus usagés, ce qui permet d'utiliser toute la charge utile .des véhicules de transport.

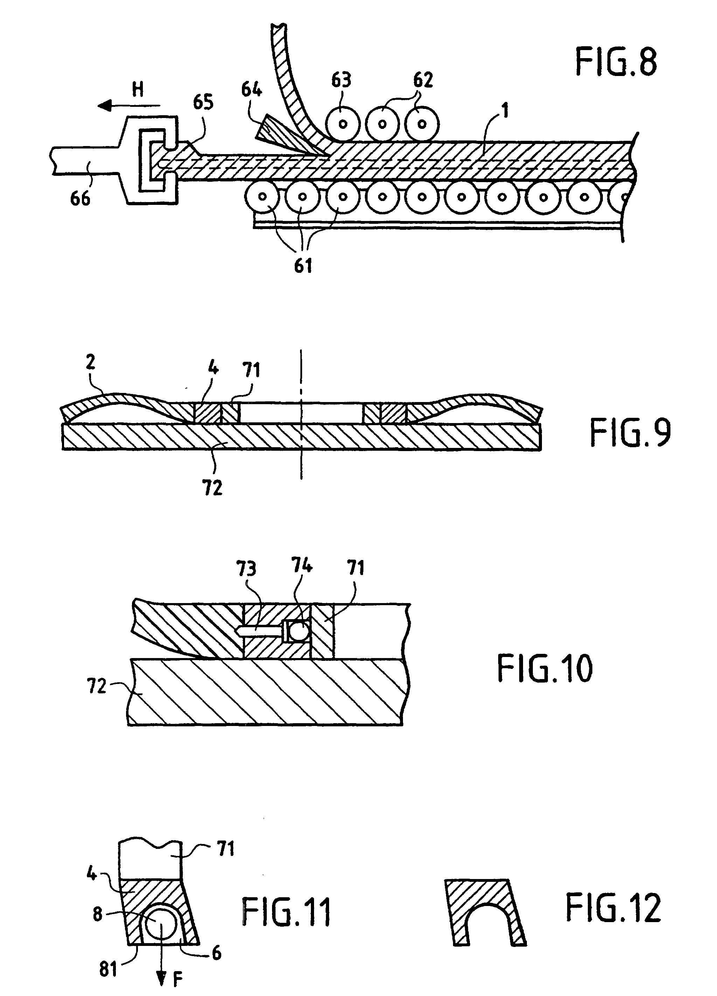

Ces différents morceaux de pneus sont alors transportés vers une unité centrale fixe de recyclage dans laquelle on effectue des opérations de récupération de gomme de caoutchouc et de la tringle du pneu (figures 8 à 10).

Ces opérations de découpe en épaisseur, ou scalpage, de la bande de roulement et des flancs ont pour but de récupérer ultérieurement des quantités importantes de poudrettes de caoutchouc de différentes qualités. Par exemple, le scalpage de la partie extérieure peut fournir une poudrette de caoutchouc pur de très bonne qualité et celui de la partie intérieure, de la poudrette de caoutchouc étanche qui peut être vendue aux fabricants de joints.

Avant de trancher ou scalper la partie extérieure de la bande de roulement, on détermine, par exemple au moyen d'un scanner à effet Doppler ou d'une sonde laser, la profondeur de la partie métallique la plus extérieure de l'armature du pneu et on détermine alors la profondeur de la première opération de découpe en épaisseur ou scalpage de la bande de roulement 1. Ceci permet de récupérer par cette opération de scalpage, une quantité maximale de la gomme extérieure de la bande de roulement qui est de première qualité tout en étant sûr de ne pas toucher l'armature du pneu ce qui introduirait des impuretés dans la tranche de caoutchouc scalpée. On peut par exemple régler la coupe pour qu'elle s'effectue à 3 mm au-dessus du pli métallique extérieur de la carcasse 6, ce qui assure que l'opération de scalpage ne touchera pas la ceinture 9 qui est généralement en matière synthétique. La détection de la position du pli métallique extérieur de la carcasse peut également être réalisée par des moyens optiques ou magnétiques sur une des faces tranchées de la bande de roulement.

Ensuite, on retourne la bande de roulement ainsi scalpée et on réalise un scalpage de sa face intérieure 20 toujours sans toucher à l'armature, à savoir la carcasse 6, afin de récupérer une tranche de caoutchouc pur de deuxième qualité.

La figure 8 représente le dispositif utilisé pour les opérations de scalpage de la bande de roulement 1. Cette dernière est posée sur des rouleaux 61 et elle est soumise à l'action de rouleaux supérieurs 62 qui sont en appui sur la bande de roulement 1 et dont au moins l'un d'entre eux, le rouleau 63 par exemple, est commandé en rotation de manière à assurer l'entraînement initial de la bande de roulement 1 en direction d'un outil de coupe 64 constitué par exemple par une lame vibrante, jusqu'à ce que l'extrémité 65 de la bande de roulement 1 soit saisie par une pince 66 qui l'entraîne dans le sens de la flèche H.

Dans l'unité centrale de recyclage, on réalise également un scalpage des flancs 2 et 3, comme cela est représenté sur les figures 9 et 10. A cet effet, chaque flanc est saisi par une couronne annulaire 71 qui est disposée à l'intérieur du flanc 2 et qui est accrochée dans le talon 4. Ceci est illustré en détail sur la figure 10 où l'on voit le flanc 2 qui est en appui sur un support plan 72. La table support 72 sur laquelle repose le flanc 2 comporte la couronne annulaire 71 qui vient épouser le talon 4 et qui est fixée dans ce dernier au moyen de pions 73 qui sont montés activement et peuvent s'engager dans le flanc 2 sous l'action d'un élément gonflable 74. La découpe est avantageusement réalisée du côté opposé au bord du talon pour couper à un endroit où les brins de l'armature qui entourent la tringle sont le plus écartés l'un de l'autre.

Une fois que le flanc a été scalpé, on le laisse dans le support 71 et on procède à la découpe du talon 4 ou 5 au plus près de la tringle 8 selon la ligne 81 (voir figures 1 et 12). On procède ensuite à l'arrachage de la tringle 8 dans le sens de la flèche F, au moyen d'un crochet, par exemple en forme de dent de requin. On enlève ensuite la portion d'armature 6 de manière à obtenir un morceau de caoutchouc pur représenté sur la figure 12.

La tringle 8 est extraite sans être coupée et en gardant approximativement sa forme circulaire. Ceci constitue une garantie pour les métallurgistes qui peuvent recycler cette tringle dans la en tant qu'acier de haute qualité.

Les résidus de la bande de roulement et des flancs qui sont constitués de caoutchouc contenant des résidus de l'armature métallique et/ou en matière synthétique sont ensuite avantageusement soumis à une opération de micronisation, c'est-à-dire que le caoutchouc est réduit en une fine poudre en laissant les tronçons d'armature débarrassés de leur gaine de caoutchouc . On réalise ensuite un tri des particules de caoutchouc pur et des résidus d'armature. Le tri des résidus d'armature en matière synthétique est réalisé de manière aéraulique par soufflage tangentiel et le tri des résidus d'armature métallique par un tri magnétique.

Le caoutchouc dans lequel sont enrobées les armatures est un caoutchouc de bonne qualité et c'est pourquoi on désire le récupérer pour le revendre à des industriels produisant des articles en caoutchouc. Pour un caoutchouc de cette qualité, les industriels exigent que la poudre de caoutchouc qui leur est proposée ne contienne aucune impureté, la détection d'une impureté dans un lot entraînant le rejet de ce lot. Il faut donc traiter ces morceaux de pneu armé de manière à récupérer le maximum de caoutchouc, mais en assurant que la poudrette fournie ne contiendra aucune impureté.

Conformément à l'invention, les morceaux de pneu armé contenant des tronçons d'armature sont soumis à l'action de jets d'eau à haute pression chargés de fines particules de matière abrasive ; les conditions de cette pulvérisation, en particulier, la pression de l'eau projetée et les dimensions des particules de matière abrasive, sont choisies pour obtenir des particules de caoutchouc dont les dimensions sont au plus égales à 12 micromètres. Cette pulvérisation est effectuée verticalement vers le bas au-dessus d'un bac contenant de l'eau.

En effet, on a constaté que, si les particules de caoutchouc remplissent cette condition de dimension, seules les particules pures, c'est-à-dire celles qui sont exemptes de toute trace d'armature métallique ou en matière plastique, surnagent de telle manière que l'on peut alors effectuer un tri par flottation en récupérant les particules qui restent à la surface de l'eau, les particules de caoutchouc comportant des traces d'armature tombant au fond du bac.

Pour obtenir une micronisation très efficace, la distance entre la surface du pneu et le dispositif de projection des jets d'eau à haute pression est très faible, inférieure à 5 mm, par exemple 2 mm.

La pression des jets d'eau est comprise entre 1500 et 2500 bars. Les dimensions de matière abrasive sont avantageusement inférieures ou égales à 7 micromètres.

Dans le cas où les morceaux de pneu ne comportent que des tronçons d'armature en matière synthétique, la pression de l'eau est fixée entre 2000 et 2100 bars et la dimension des grains de matière abrasive est d'environ 5 micromètres. Par contre, si les morceaux de pneu comportent des tronçons d'armature métallique, la pression de l'eau est d'environ 1800 bars et la dimension des grains de matière abrasive est d'environ 7 micromètres. Cette pression réduite permet d'éviter d'attaquer les armatures métalliques.

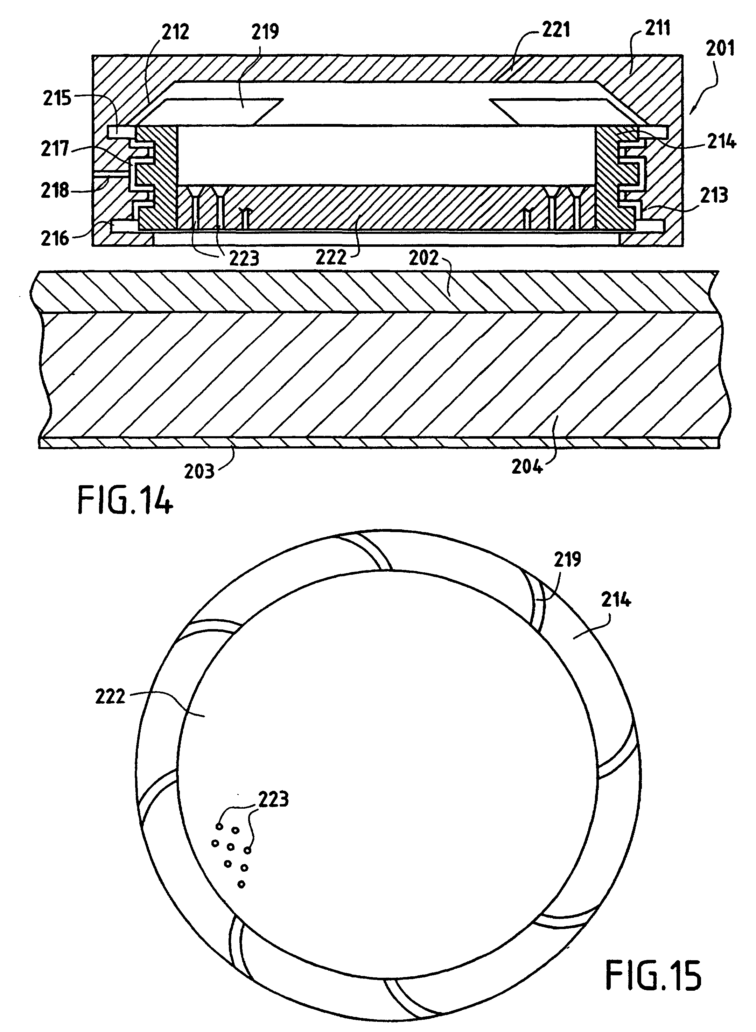

On a représenté sur la figure 14, schématiquement en coupe, un dispositif pour la mise en oeuvre de l'invention, la figure 15 étant une vue de dessus de l'ensemble du rotor et de l'élément diffuseur. On voit sur la figure 14, un dispositif diffuseur 201 qui projette des jets d'eau très fins sous haute pression sur un morceau de pneu 202 qui est disposé en dessous du dispositif diffuseur 201 et au-dessus d'un bac 203, représenté partiellement, qui contient de l'eau 204. Avantageusement, ce bac 203 s'étend sous toute la largeur et la longueur du morceau de pneu 202 et le dispositif diffuseur 201 est déplacé au-dessus du morceau de pneu 202 de manière à réaliser un balayage de toute la surface de ce dernier. Le dispositif diffuseur 201 est constitué d'une enceinte 211 creuse et présentant un profil intérieur en forme de cloche dont la partie supérieure 212 est moins large que la partie inférieure 213. Dans cette enceinte 211, qui est ouverte vers le bas, est disposé un rotor annulaire 214 qui est coaxial à l'enceinte 211. Ce rotor 214 est monté dans l'enceinte 211 dans la partie inférieure 13 de cette dernière avec très peu de frottement. Le rotor 214 est disposé de manière étanche dans l'enceinte 211 de telle manière que la partie supérieure de l'enceinte 211 est isolée de l'extérieur. Cette étanchéité est réalisée au moyen de deux joints thermoplastiques à lèvres 215 et 216 qui sont en contact avec le rotor 214, le joint annulaire 215 est en contact avec la partie supérieure de la face externe du rotor 214 et le joint annulaire 216 avec la partie inférieure de cette face.

Le rotor 214 est monté dans la partie inférieure de l'enceinte 211 par l'intermédiaire d'un palier hydraulique ; à cet effet, la face interne de la partie inférieure de l'enceinte 211 et la face externe du rotor 214 présentent des profils en créneau complémentaires qui coopèrent l'un dans l'autre de manière à aménager entre eux un canal 217 en forme de créneau qui s'étend entre les joints 215 et 216 et qui est relié par une canalisation 218 à une source d'eau à moyenne pression.

Le rotor 214 comporte, à sa partie supérieure, des aubes 219 qui comportent des parties en forme de cuillères non représentées qui permettent d'augmenter la vitesse de rotation du rotor. Une conduite d'alimentation en eau tangentielle 221 est aménagée dans la paroi supérieure de l'enceinte 211. L'enceinte 211 est constituée de 2 demi-coquilles de manière à permettre la mise en place du rotor à face crénelée.

Dans la partie inférieure du rotor 214, à l'intérieur de ce dernier, est fixé, de manière amovible, un élément diffuseur 222 en forme de disque. Cet élément diffuseur 222 est avantageusement fixé dans le rotor 214 par vissage dans la paroi interne de ce dernier, ce qui permet de le démonter facilement pour son entretien ou son remplacement.

Cet élément diffuseur 222 comporte une pluralité de trous traversants 223 (dont quelques-uns sont représentés sur les figures 1 et 2) qui sont disposés selon des cercles concentriques comme on peut voir sur la figure 2. Ces trous 223 ont un très faible diamètre, inférieur à 0,1 mm, par exemple 0,09 mm. Ces trous 223 sont avantageusement évasés à leur partie supérieure.

La partie supérieure de l'enceinte 211, la partie supérieure du rotor 214 et l'élément diffuseur 222 délimitent une chambre intérieure dans laquelle on envoie, par l'intermédiaire de la conduite 221, de l'eau sous très haute pression.

On alimente par exemple cette enceinte par une eau sous une pression de 4000 bars. Le jet d'eau envoyé par la conduite 221 frappe les ailettes 219 du rotor 214 qui est entraîné en rotation à une vitesse de 2000 tours/mn. L'eau sous pression se trouvant dans la chambre précitée subit une perte de charge de telle sorte que la pression de l'eau sortant des trous 223 n'est plus que de 2000 bars environ.

Avant d'envoyer l'eau sous pression très élevée par la conduite 221, on relie la canalisation 218 à une source d'eau à moyenne pression, par exemple environ 2000 bars. La très haute pression de 4000 bars et la pression moyenne de 2000 bars sont fournies par une même centrale hydraulique. La pression moyenne de 2000 bars appliquée au canal 217 est suffisante pour mettre le rotor 214 en sustentation et assurer sa rotation avec seulement un frottement fluide dans le palier hydraulique.

Lors de la mise en route, on applique tout d'abord la moyenne pression sur la canalisation 218 avant d'envoyer la haute pression sur la canalisation 221.

La sustentation du rotor 214 par le palier hydraulique permet de maintenir le rotor 214 à une hauteur déterminée dans l'enceinte 211. Ceci permet de faire travailler le dispositif de micronisation de manière très efficace puisque l'on peut disposer la sortie des trous 223 à une distance précise, ici d'environ 2 mm de la surface du morceau de pneu 2.

Selon un mode de réalisation de l'invention, le diamètre utile de l'élément diffuseur 222, c'est-à-dire le diamètre du plus grand cercle de trous 223, est d'environ 100 mm ; le nombre et la disposition des trous 223 sont déterminés en fonction de la vitesse de rotation et de la vitesse de déplacement du dispositif diffuseur 201 pour réaliser de manière fiable, un balayage de la totalité de la surface de pneu armé à traiter. Le débit d'un tel diffuseur tournant à environ 2000 tours/mn est de 24 litres/mn environ.

Lorsque le morceau de pneu 202 est soumis à une micronisation par le dispositif diffuseur 201, le caoutchouc dans lequel sont enrobés les morceaux d'armature est pulvérisé et réduit en des particules dont la dimension est au plus égale à 12 microns. On a constaté, que pour cette dimension, seules les particules de caoutchouc pur flottent sur l'eau 204. Elles sont donc récupérées ensuite par flottation afin d'être réutilisées dans la fabrication des pneus ou autres besoins.

Les particules de caoutchouc comportant des impuretés métalliques ou en matière synthétique tombent au fond du bac 203. L'eau chargée de résidus se trouvant dans le bac 203 est ensuite traitée et suit tout d'abord un tri magnétique qui permet de récupérer les morceaux d'armature métallique qui peuvent être réutilisés dans l'industrie métallurgique. Un tri aéraulique par soufflage permet de récupérer les morceaux d'armature en matière synthétique qui flottent sur l'eau et qui sont revendus comme combustible. Les boues résiduelles sont éliminées par incinération si bien que ce traitement de recyclage de pneus ne produit aucun déchet.

Lorsque les morceaux de pneu armé sont de grandes dimensions, on récupère directement les nappes de carcasses débarrassées de leur caoutchouc.

Pour obtenir de la poudrette de caoutchouc, on peut également découper les résidus armés de la bande de roulement et des flancs en petits morceaux de quelques centimètres qui sont soumis à un traitement de broyage et de pulvérisation.

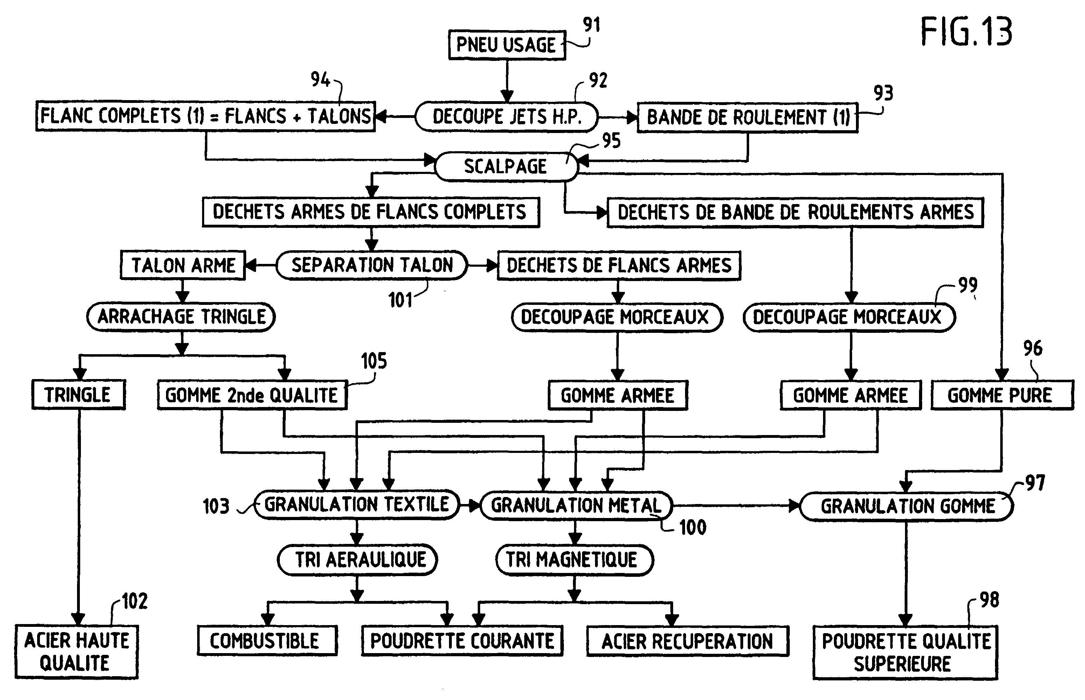

La figure 13 résume les opérations et les résultats du recyclage de pneus usagés. Le pneu usagé est soumis à une découpe transversale et radiale dans l'unité mobile sur le site de récupération des pneus usagés, la découpe étant réalisée au moyen de jets d'eau sous haute pression à partir de l'intérieur du pneu comme expliqué plus haut. Cette opération fournit d'une part des flancs complets et des morceaux de bande de roulement qui sont envoyés à l'unité fixe de traitement où l'on réalise un scalpage de la bande de roulement et des flancs qui fournit d'une part de la gomme pure de première qualité (étape 96) qui est soumise à une granulation pour fournir (étape 97) de la poudrette de qualité supérieure (étape 98). Les déchets de bande de roulement peuvent être découpés (étape 99) avant d'être envoyés à un dispositif de micronisation ou de pulvérisation (étape 100) qui fournit par tri aéraulique et tri magnétique des morceaux d'armature en matière plastique qui sont utilisés comme combustible, des morceaux d'armature métallique qui sont recyclés dans l'industrie métallurgique et de la poudrette de qualité courante.

Après le scalpage des flancs, on sépare le talon (étape 101). Le talon subit l'opération d'arrachage de la tringle qui est récupéré comme acier de haute qualité (étape 102). Les déchets de flancs sont découpés en morceaux et soumis également à une étape de micronisation 103 pour fournir les mêmes produits que les déchets de la bande de roulement.

Après l'arrachage de la tringle, on récolte de la gomme de caoutchouc de deuxième qualité (étape 105) qui est également soumise à une opération de micronisation (103) pour fournir la poudrette de caoutchouc de qualité courante.

Cette opération permet de réaliser de manière économique le recyclage de pneus usagés de grandes dimensions tels que des pneus d'aviation, d'engins agricoles et d'engins de travaux publics. Le fait d'utiliser une découpe par jet d'eau sous haute pression en milieu liquide permet d'obtenir une découpe de très bonne qualité avec un bruit supportable, ce qui permet d'obtenir, dans l'unité mobile, des morceaux de pneus qui occupent un faible volume et qui peuvent être ensuite transportés de manière économique jusqu'au site fixe de recyclage.

Dans l'unité fixe de traitement, les opérations de scalpage sont optimisées, en particulier au moyen de la mesure de la position exacte des armatures afin de récupérer le maximum de poudrette de caoutchouc de qualité supérieure qui peut être vendue aux fabricants de pneumatiques. L'épaisseur de gomme récupérée par pneu est comprise entre 60 et 80 mm pour la partie extérieure de la bande de roulement et de 6 à 8 mm pour sa partie intérieure. L'ensemble du traitement permet d'obtenir des produits recyclables de bonne qualité en particulier en ce qui concerne les gommes extérieure et intérieure de la bande de roulement et la tringle du pneu.

Ainsi, l'invention permet de réaliser un ensemble de recyclage de pneus qui peut traiter 3 à 4 tonnes de pneus par heure sur le site de stockage des pneus usagés, ce qui conduit au chargement d'une semi-remorque en 8 heures, si bien que le tracteur de transport ne reste pas sur le site de découpage et peut être utilisé à d'autres tâches pendant la journée. Un tel ensemble peut traiter 15 000 tonnes de pneus usagés par an, ce qui assure sa rentabilité.

L'opération de découpe préalable des bords de la bande de roulement permet d'utiliser le procédé et le dispositif de l'invention également pour des pneus neufs ou très peu usés qui présentent une épaisseur de gomme de bande de roulement très importante.

Le procédé et le dispositif selon l'invention ne créent aucune nuisance pour l'environnement. En effet, l'eau chargée de résidus se trouvant dans le bac de l'unité mobile est centrifugée pour recycler l'eau dans les buses de découpe. Les boues résiduelles ne sont pas rejetées, mais transportées à l'unité fixe de traitement qui les traite pour recycler les particules de matière abrasive qui peuvent être utilisées ultérieurement pour l'étape de micronisation. Les différentes boues obtenues dans l'unité fixe sont traitées pour récupérer les tronçons d'armature et les boues résiduelles sont brûlées.

On voit que l'invention permet de récupérer des poudrettes de caoutchouc pur exemptes de toutes impuretés qui peuvent donc être recyclées, notamment dans l'industrie du pneu ou des joints. Cette opération de micronisation permet de conserver toutes les qualités du caoutchouc qui peut dont être réutilisé pour la fabrication de nouveaux pneus.

Il ressort de ce qui précède que l'invention n'est pas limitée aux modes de mise en oeuvre qui ont été spécifiquement décrits dans le courant des exemples ci-dessus et qu'elle s'étend au contraire à toute variante selon les revendications 1 et 11.

## Revendications

1. Procédé de découpe de pneus en vue de leur recyclage, en particulier pour la récupération de gomme de caoutchouc, dans lequel on découpe la bande de roulement (1) pour la séparer des deux flancs (2, 3) au moyen d'un jet d'eau à haute pression, **caractérisé en ce que** la découpe est effectuée à partir de l'intérieur du pneu selon une direction radiale et dans un milieu liquide tel que de l'eau.

2. Procédé selon la revendication 1, **caractérisé en ce que** l'on découpe préalablement les deux bords de la bande de roulement (1) de manière à réaliser un chanfrein (30).

3. Procédé selon la revendication 1 ou 2, **caractérisé en ce que** l'on fait tourner le pneu autour d'un axe horizontal (10) de telle manière qu'une partie de sa bande de roulement (1) circule dans une cuve (21) contenant de l'eau et dans laquelle il est disposé au moins une buse radiale (41, 42) fixe de projection d'eau à haute pression, travaillant en milieu liquide.

4. Procédé selon l'une quelconque des revendications 1 à 3, **caractérisé en ce que**, avant la découpe de la bande de roulement (1), on réalise au moins une coupe transversale de la bande de roulement (1) au moyen d'une buse transversale (33) mobile de projection d'eau à haute pression travaillant en milieu liquidé, disposée à l'intérieur du pneu et se déplaçant selon une direction parallèle à l'axe du pneu (10).

5. Procédé selon la revendication 3 ou 4, **caractérisé en ce que** la ou les buses radiales (41, 42) sont supportées chacune par un support de guidage (45) maintenu en appui sur la surface intérieure (20) de la bande de roulement (1) et circulant sur celle-ci de telle manière que la ou les buses radiales (41, 42) soient maintenues à une faible distance prédéterminée de ladite surface intérieure (20) de la bande de roulement (1).

6. Procédé selon l'une quelconque des revendications 1 à 5, **caractérisé en ce que** l'opération de découpe de la bande de roulement (1) est réalisée sur un site de stockage de pneus par une unité mobile de découpe et **en ce que** l'on transporte les deux flancs (2, 3) et la bande de roulement (1) à une unité fixe de récupération de la gomme de caoutchouc.

7. Procédé selon l'une quelconque des revendications 6, **caractérisé en ce que** la bande de roulement (1) est découpée transversalement en tronçons par l'unité mobile de découpe.

8. Procédé selon l'une quelconque des revendications 1 à 7, **caractérisé en ce que** l'on réalise une découpe en épaisseur de la face extérieure et de la face intérieure de la bande de roulement (1) et **en ce que** l'épaisseur de la découpe de la face extérieure est déterminée par une détection de la position de l'armature (6) disposée le plus à l'extérieur du pneu dans la bande de roulement (1).

9. Procédé selon l'une quelconque des revendications 1 à 8, **caractérisé en ce que** chaque flanc (2, 3) est entraîné en rotation autour de son axe au moyen d'une pièce circulaire (71) fixée sur le talon (4, 5) du pneu et **en ce que** l'on réalise une découpe en épaisseur du flanc (2, 3) au moyen d'un outil de coupe se déplaçant radialement de manière à réaliser une découpe en profondeur selon une spirale.

10. Procédé selon la revendication 9, **caractérisé en ce que**, après la découpe en épaisseur des flancs (2, 3), on découpe le talon (4, 5) au voisinage immédiat de la partie extérieure de la tringle (7, 8) du pneu et **en ce que** l'on extrait cette dernière (7, 8) au moyen d'un crochet, le talon (4, 5) étant maintenu dans la pièce circulaire d'entraînement (71) du flanc (4, 5) .

11. Dispositif pour la mise en oeuvre du procédé selon l'une des revendications précédentes, comportant des moyens de découpe à l'intérieur d'un pneu, **caractérisé en ce qu'**il comporte une cuve (21) remplie d'un liquide au-dessus de laquelle le pneu est fixé verticalement, d'un côté au moyen d'une pièce circulaire rotative du dispositif (22, 24) qui est fixée sur un talon (5) du pneu et entraîne le pneu en rotation autour de son axe et, de l'autre côté, au moyen d'une pièce fixe du dispositif (25, 26, 27, 28) sur laquelle circule l'autre talon (4) du pneu et qui présente au moins une ouverture (29) pour le passage de conduites (31) d'alimentation et de commande de buses de découpe (33, 41, 42) faisant partie du dispositif qui sont disposées à l'intérieur de la partie immergée du pneu.

12. Dispositif selon la revendication 11, **caractérisé en ce que** la pièce fixe est constituée par au moins trois bras radiaux de longueur réglable (26) portant chacun une roulette (27) engagée sur le talon (4, 5) du pneu.

13. Dispositif selon la revendications 11 ou 12, **caractérisé en ce qu'**il comporte, pour chaque découpe de la bande, un disque rotatif d'ébavurage (43, 44) disposé en aval de la buse radiale (41, 42) à l'extérieur de la bande de roulement (1), et au voisinage de cette dernière.

14. Dispositif selon l'une quelconque des revendications 11 à 13, **caractérisé en ce qu'**il est monté sur une unité mobile qui comprend un dispositif de traitement des boues pour le recyclage de l'eau pour son utilisation pour la découpe de la bande de roulement (1).

15. Dispositif selon l'une quelconque des revendications 11 à 14, **caractérisé en ce qu'**il comporte, pour la découpe en épaisseur de la bande de roulement (1) et des flancs (2, 3), au moins une lame vibrante ou un disque de découpe rotatif.

16. Dispositif selon l'une quelconque des revendications 11 à 15, **caractérisé en ce qu'**il comporte un scanner à effet Doppler pour la mesure de la position de l'armature extérieure dans la bande de roulement (1).

17. Procédé suivant l'une quelconque des revendications 1 à 10, comprenant en outre, pour la récupération de gomme pure de caoutchouc, une étape de pulvérisation de morceaux découpés dudit pneu par des jets d'eau à haute pression chargés de grains de matière abrasive très fins, au-dessus d'un bac (203) contenant un liquide, tel que de l'eau, de manière à obtenir des particules de caoutchouc de dimensions inférieures ou égales à 12 micromètres, et une étape de tri par flottation des particules de caoutchouc obtenues en récupérant les particules exemptes d'impuretés qui flottent sur le liquide.

18. Procédé selon la revendication 17, **caractérisé en ce que** la pression des jets d'eau est comprise entre 1500 et 2500 bars.

19. Procédé selon la revendication 17, **caractérisé en ce que** les dimensions des grains de matière abrasive sont inférieures ou égales à 7 micromètres.

20. Procédé selon l'ensemble des revendications 18 et 19, **caractérisé en ce que** la pression de l'eau est comprise entre 2000 et 2100 bars et **en ce que** la dimension des grains de matière abrasive est d'environ 5 micromètres.

21. Procédé selon l'ensemble des revendications 18 et 19, **caractérisé en ce que** la pression de l'eau est d'environ 1800 bars et **en ce que** la dimension des grains de matière abrasive est d'environ d'environ 7 micromètres.

22. Dispositif selon l'une quelconque des revendications 11 à 16, **caractérisé en ce que**, pour la récupération de gomme pure à partir des morceaux découpés desdits pneus, par pulvérisation sous des jets d'eau à haute pression chargés de grains de matière abrasive très fins, il comporte en outre une enceinte (211) en forme de cloche, un rotor annulaire (214) muni d'aubes (219) à sa partie supérieure et monté à rotation de manière étanche dans la partie inférieure ouverte de l'enceinte (211), et un élément diffuseur (222) en forme de disque qui est fixé à l'intérieur de la partie inférieure du rotor (214) et qui comporte une pluralité de trous traversants (223) de très faible diamètre, et **en ce que** l'enceinte (211) est alimentée en eau sous très haute pression à sa partie supérieure fermée de telle sorte que le rotor (214) constitue une turbine entraînant l'élément diffuseur (222) en rotation à très grande vitesse et que l'eau est projetée par les trous (223) de l'élément diffuseur (222) sous forme de jets très fins à haute pression.

23. Dispositif selon la revendication 22, **caractérisé en ce que** le rotor (214) est monté dans l'enceinte (211), par l'intermédiaire d'un palier hydraulique (217).

24. Dispositif selon la revendication 22, **caractérisé en ce que** la paroi interne de la partie inférieure de l'enceinte (211) et la face interne du rotor (214) présentent des profils crénelés complémentaires délimitant un canal (217) alimenté en eau sous haute pression .

25. Dispositif selon l'une quelconque des revendications 22 à 24, **caractérisé en ce que** les aubes (219) du rotor (214) comportent une partie en forme de cuiller.

26. Dispositif selon l'une quelconque des revendications 22 à 25, **caractérisé en ce que** le diamètre des trous (223) de l'élément diffuseur (222) est inférieur à 0,1 mm.

27. Dispositif selon l'une quelconque des revendications 23 à 26, **caractérisé en ce que** l'enceinte (211) comporte deux joints annulaires à lèvres en contact avec le rotor (214) et disposés de part et d'autre du palier hydraulique (217).

28. Dispositif selon l'une quelconque des revendications 22 à 27, **caractérisé en ce que** l'élément diffuseur (222) est fixé de manière amovible dans le rotor (214), par exemple par vissage.

29. Dispositif selon l'une quelconque des revendications 22 à 28, **caractérisé en ce que** les trous (223) de l'élément diffuseur (22) sont évasés à leur extrémité interne.

## Claims

1. A method for cutting up tires with a view to recycling them, particularly for recovering rubber, in which method the tread strip (1) is cut to separate it from the two sidewalls (2, 3) using a high-pressure water jet, **characterized in that** the cutting is performed from the inside of the tire in a radial direction and in a liquid medium such as water.

2. A method as claimed in claim 1, **characterized in that** the two edges of the tread strip (1) are cut off beforehand to produce a chamfer (30).

3. A method as claimed in claim 1 or 2, **characterized in that** the tire is rotated about a horizontal axle (10) in such a way that part of its tread strip (1) runs through a tank (21) which contains water and in which there is arranged at least one fixed radial nozzle (41, 42) for spraying high-pressure water, working in a liquid medium.

4. A method as claimed in any of claims 1 to 3, **characterized in that**, before cutting off the tread strip (1), at least one transverse cut is made in the tread strip (1) using a mobile transverse nozzle (33) for spraying high-pressure water working in a liquid medium, arranged inside the tire and moving in a direction parallel to the axle of the tire (10).

5. A method as claimed in claim 3 or 4, **characterized in that** the radial nozzle or nozzles (41, 42) are each supported by a guiding support (45) held against the interior surface (20) of the tread strip (1) and running along the latter in such a way that the radial nozzle or nozzles (41, 42) are held a predetermined short distance away from said interior surface (20) of the tread strip (1).

6. A method as claimed in any of claims 1 to 5, **characterized in that** the operation of cutting off the tread strip (1) is performed at a tire storage site by a mobile cutting unit and the two sidewalls (2, 3) and the tread strip (1) are transported to a fixed rubber-recovery unit.

7. A method as claimed in claim 6, **characterized in that** the tread strip (1) is cut transversely into lengths by the mobile cutting unit.

8. A method as claimed in any of claims 1 to 7, **characterized in that** a cut is made into the thickness of the exterior face and of the interior face of the tread strip (1), and the thickness of the cut in the exterior face is determined by detection of the position of the belting (6) nearest the outside of the tire in the tread strip (1).

9. A method as claimed in any of claims 1 to 8, **characterized in that** each sidewall (2, 3) is rotated about its axis by means of a circular piece (71) fixed to the bead (4, 5) of the tire, and a cut is made into the thickness of the sidewall (2, 3) using a cutting tool moving radially so as to make a cut depthwise in the form of a spiral.

10. A method as claimed in claim 9, **characterized in that**, after having cut into the thickness of the sidewalls (2, 3), the bead (4, 5) is cut in close proximity to the outer part of the bead wire (7, 8) of the tire, and this bead wire (7, 8) is extracted using a hook, the bead (4, 5) being held in the circular piece (71) used for driving the sidewall (2, 3).

11. A device for implementing the method as claimed in one of the preceding claims, involving means for cutting inside the tire, **characterized in that** it comprises a tank (21) filled with a liquid over which the tire is fixed vertically, on one side by means of a rotary circular piece (22, 24) fixed to a bead (5) of the tire and driving the tire in rotation about its axis and, on the other side, by means of a fixed piece (25, 26, 27, 28) on which the other bead (4) of the tire runs and which has at least one opening (29) for the passage of the pipes (31) supplying and controlling the cutting nozzles (33, 41, 42) arranged inside the submerged part of the tire.

12. A device as claimed in claim 11, **characterized in that** the fixed piece consists of at least three radial arms of adjustable length (26) each carrying a roller (27) engaged on the bead (4, 5) of the tire.

13. A device as claimed in claim 11 or 12, **characterized in that** it comprises, for each cut into the tread strip, a rotary deburring disk (43, 44) arranged downstream of the radial nozzle (41, 42) on the outside of the tread strip (1) and close to the latter.

14. A device as claimed in any of claims 11 to 13, being mounted on a mobile unit which comprises a sludge processing device for recycling the water so that it can be used for cutting the tread strip (1).

15. A device as claimed in any of claims 11 'to 14, **characterized in that** it comprises, for cutting into the thickness of the tread strip (1) and of the sidewalls (2, 3), at least a vibrating blade or a rotary cutting disk.

16. A device as claimed in any of claims 11 to 15, comprising a Doppler-effect scanner for measuring the position of the outer belting in the tread strip (1).

17. A method as claimed in any of claims 1 to 10, further comprising for the recovering of pure rubber, a step of spraying cut bits of said tire with high-pressure water jets laden with very fine grains of abrasive substance over a bath (203) containing a liquid, such as water, so as to obtain rubber particles measuring 12 micrometers or less, and a step of sorting the rubber particles obtained by floating them and collecting the impurity-free particles which float on the liquid.

18. A method as claimed in claim 17, **characterized in that** the pressure of the water jets is between 1500 and 2500 bar.

19. A method as claimed in claim 17, **characterized in that** the grains of abrasive substance measure 7 micrometers or less.

20. A method as claimed in both of claims 18 and 19, **characterized in that** the pressure of the water is between 2000 and 2100 bar and the grains of abrasive substance measure about 5 micrometers.

21. A method as claimed in both of claims 18 and 19, **characterized in that** the pressure of the water is about 1800 bar and the grains of abrasive substance measure about about 7 micrometers.

22. A device as claimed in any of claims 11 to 16 **characterized in that**, for the recovering of pure rubber from cut bits of said tires through spraying with high-pressure water jets laden with very fine grains of abrasive substance, it further comprises a bell-shaped chamber (211), an annular rotor (214) with blades (219) at its upper part and mounted to rotate in a sealed manner in the open lower part of the chamber (211) and of a diffuser element (222) in the form of a disk which is fixed inside the lower part of the rotor (214) and which comprises a number of through-holes (223) of very small diameter, and **in that** the chamber (211) is supplied with water at very high pressure in its closed upper part so that the rotor (214) forms a turbine wheel driving the diffuser element (222) in rotation at very high speed and so that the water is sprayed through the holes (223) of the diffuser element (222) in the form of very fine high-pressure jets.

23. A device as claimed in claim 22, **characterized in that** the rotor (214) is mounted in the chamber (211) via a hydraulic bearing (217).

24. A device as claimed in claim 22, **characterized in that** the internal wall of the lower part of the chamber (211) and the internal face of the rotor (214) have complementing crenelated profiles delimiting a channel (217) supplied with high-pressure water.

25. A device as claimed in any of claims 22 to 24, **characterized in that** the blades (219) of the rotor (214) comprise a spoon-shaped part.

26. A device as claimed in any of claims 22 to 25, **characterized in that** the diameter of the holes (223) in the diffuser element (222) is less than 0.1 mm.

27. A device as claimed in any of claims 23 to 26, **characterized in that** the chamber (211) comprises two annular lip seals in contact with the rotor (214) and arranged one on each side of the hydraulic bearing (217).

28. A device as claimed in any of claims 22 to 27, **characterized in that** the diffuser element (222) is fixed removably into the rotor (214), for example by screwing.

29. A device as claimed in any of claims 22 to 28, **characterized in that** the holes (223) in the diffuser element (22) are flared at their inner end.

## Patentansprüche

1. Verfahren zum Zerschneiden von Reifen zwecks deren Recycling, insbesondere für die Rückgewinnung von Kautschukgummi, bei dem die Reifenlauffläche (1) mittels eines Hochdruckwasserstrahls abgeschnitten wird, um sie von den beiden Flanken (2, 3) zu trennen, **dadurch gekennzeichnet, dass** das Zerschneiden vom Inneren des Reifens aus entlang einer radialen Richtung und in einem flüssigen Medium wie etwa Wasser ausgeführt wird.

2. Verfahren gemäß Anspruch 1, **dadurch gekennzeichnet, dass** zuvor die beiden Ränder der Reifenlauffläche (1) abgeschnitten werden, sodass dabei eine Fase (30) entsteht.

3. Verfahren gemäß Anspruch 1 oder 2, **dadurch gekennzeichnet, dass** man den Reifen derart um eine horizontale Achse (10) rotieren lässt, dass ein Teil seiner Lauffläche (1) in einem Wasser enthaltenden Behälter (21) zirkuliert, in dem mindestens eine in flüssigem Medium arbeitende ortsfeste, radiale Hochdruckwasserstrahldüse (41, 42) angeordnet ist.

4. Verfahren gemäß irgendeinem der Ansprüche 1 bis 3, **dadurch gekennzeichnet, dass** vor dem Abschneiden der Reifenlauffläche (1) mindestens ein Schnitt der Reifenlauffläche (1) in transversaler Richtung ausgeführt wird, und zwar mittels einer in flüssigem Medium arbeitenden beweglichen, transversalen Hochdruckwasserstrahldüse (33), die im Inneren des Reifens angeordnet ist und sich entlang einer zu der Achse des Reifens (10) parallelen Richtung bewegt.

5. Verfahren gemäß Anspruch 3 oder 4, **dadurch gekennzeichnet, dass** die radiale(n) Düse(n) (41, 42) jeweils durch einen Führungsträger (45) gehalten wird bzw. werden, der sich auf der Innenfläche (20) der Reifenlauffläche (1) abstützt und auf dieser derart zirkuliert, dass die radiale(n) Düse(n) (41, 42) in einem vorbestimmten geringen Abstand von der Innenfläche (20) der Reifenlauffläche (1) gehalten wird bzw. werden.

6. Verfahren gemäß irgendeinem der Ansprüche 1 bis 5, **dadurch gekennzeichnet, dass** der Vorgang des Abschneidens der Reifenlauffläche (1) in einer Reifenlagerungsstätte durch eine mobile Schneideanlage ausgeführt wird, und dass die beiden Flanken (2, 3) und die Reifenlauffläche (1) zu einer ortsfesten Rückgewinnungsanlage für das Kautschukgummi befördert werden.

7. Verfahren gemäß Anspruch 6, **dadurch gekennzeichnet, dass** die Reifenlauffläche (1) durch die mobile Zerschneideanlage transversal in Abschnitte aufgeteilt wird.

8. Verfahren gemäß irgendeinem der Ansprüche 1 bis 7, **dadurch gekennzeichnet, dass** ein Abschneiden der Dicke der Außenfläche und der Innenfläche der Reifenlauffläche (1) ausgeführt wird, und dadurch, dass die Dicke der abzuschneidenden Außenfläche durch eine Erkennung der Lage der Unterbauschicht(6) bestimmt wird, die innerhalb der Lauffläche (1) des Reifens am weitesten nach außen angeordnet ist.

9. Verfahren gemäß irgendeinem der Ansprüche 1 bis 8, **dadurch gekennzeichnet, dass** jede Flanke (2, 3) mit Hilfe eines auf dem Wulst (4, 5) des Reifens befestigten kreisförmigen Teils (71) zur Rotation um ihre Achse angetrieben wird, und dadurch, dass ein Abschneiden der Dicke der Flanke (2, 3) mit Hilfe eines Schneidwerkzeugs ausgeführt wird, das sich radial bewegt, und so einen Schnitt in der Tiefe gemäß einer Spirale ausführt.

10. Verfahren gemäß Anspruch 9, **dadurch gekennzeichnet, dass** nach dem Abschneiden der Dicke der Flanken (2, 3) der Wulst (4, 5) in unmittelbarer Nähe des äußeren Teils des Wulstkerns (7, 8) des Reifens abgeschnitten wird, und dadurch, dass dieser Kern (7, 8) mit Hilfe eines Hakens extrahiert wird, wobei der Wulst (4, 5) in dem kreisförmigen Antriebsteil (71) der Flanke (2, 3) festgehalten wird.

11. Vorrichtung zur Ausführung des Verfahrens gemäß einem der vorstehenden Ansprüche, umfassend Mittel zum Schneiden im Inneren eines Reifens, **dadurch gekennzeichnet, dass** sie einen mit einer Flüssigkeit gefüllten Behälter (21) umfasst, über dem der Reifen vertikal befestigt ist, auf der einen Seite mit Hilfe eines kreisförmigen, rotierenden Teils der Vorrichtung (22, 24), das auf einem Wulst (5) des Reifens befestigt ist und den Reifen zur Rotation um seine Achse antreibt, und auf der anderen Seite mit Hilfe eines festen Teils der Vorrichtung (25, 26, 27, 28), auf dem der andere Wulst (4) des Reifens zirkuliert und das mindestens eine Öffnung (29) zum Durchlass von Leitungen (31) zur Versorgung und Steuerung von Schneidedüsen (33, 41, 42) aufweist, die zu der Vorrichtung gehören und im Inneren des eingetauchten Teils des Reifens angeordnet sind.

12. Vorrichtung gemäß Anspruch 11, **dadurch gekennzeichnet, dass** das feste Teil aus mindestens drei radialen Armen von verstellbarer Länge (26) besteht, wovon jeder eine auf dem Wulst (4, 5) des Reifens angreifende Rolle (27) trägt.

13. Vorrichtung gemäß Anspruch 11 oder 12, **dadurch gekennzeichnet, dass** sie für jede Schnittstelle der Lauffläche eine rotierende Scheibe zum Entgraten (43, 44) umfasst, die abströmseitig von der radialen Düse (41, 42) außerhalb der Reifenlauffläche (1) angeordnet und dieser benachbart ist.

14. Vorrichtung gemäß irgendeinem der Ansprüche 11 bis 13, **dadurch gekennzeichnet, dass** sie in einer mobilen Anlage montiert ist, die eine Vorrichtung zur Schlammbehandlung zur Rezyklierung des Wassers für seine Verwendung zum Abschneiden der Reifenlauffläche (1) umfasst.

15. Vorrichtung gemäß irgendeinem der Ansprüche 11 bis 14, **dadurch gekennzeichnet, dass** sie zum Abschneiden der Dicke der Reifenlauffläche (1) und der Flanken (2, 3) mindestens eine schwingende Schneide oder eine rotierende Schneidscheibe umfasst.

16. Vorrichtung gemäß irgendeinem der Ansprüche 11 bis 15, **dadurch gekennzeichnet, dass** sie einen Dopplereffekt-Scanner zur Messung der Lage des äußeren Unterbaus in der Reifenlauffläche (1) umfasst.

17. Verfahren nach irgendeinem der Ansprüche 1 bis 10, zur Rückgewinnung von reinem Kautschukgummi außerdem umfassend eine Phase zur Pulverisierung von zerschnittenen Stücken des Reifens durch mit sehr kleinen Schleifkörnern versetzte Hochdruckwasserstrahlen oberhalb eines eine Flüssigkeit wie etwa Wasser enthaltenden Behälters (203), um Kautschukteilchen mit Abmessungen von 12 µm oder darunter zu erhalten, und eine Phase zur Sortierung der erhaltenen Kautschukteilchen durch Flotation, indem die Teilchen ohne Verunreinigungen, die auf der Flüssigkeit flotieren, rückgewonnen werden.

18. Verfahren gemäß Anspruch 17, **dadurch gekennzeichnet, dass** der Druck der Wasserstrahlen zwischen 1 500 und 2 500 bar liegt.

19. Verfahren gemäß Anspruch 17, **dadurch gekennzeichnet, dass** die Abmessungen der Schleifkörner 7 µm oder darunter betragen.

20. Verfahren gemäß den beiden Ansprüchen 18 und 19, **dadurch gekennzeichnet, dass** der Wasserdruck zwischen 2 000 und 2 100 bar liegt, und dass die Abmessung der Schleifkörner ungefähr 5 µm beträgt.

21. Verfahren gemäß den beiden Ansprüchen 18 und 19, **dadurch gekennzeichnet, dass** der Wasserdruck ungefähr 1 800 bar beträgt, und dass die Abmessung der Schleifkörner ungefähr 7 µm beträgt.

22. Vorrichtung gemäß irgendeinem der Ansprüche 11 bis 16, **dadurch gekennzeichnet, dass** sie zur Rückgewinnung reinen Gummis aus den zerschnittenen Stücken der Reifen durch Pulverisierung unter mit sehr kleinen Schleifkörnern versetzten Hochdruckwasserstrahlen außerdem umfasst eine glockenförmige Umschließung (211), einen ringförmigen Rotor (214), der an seinem oberen Teil mit Schaufeln (219) versehen ist und in abdichtender Weise in dem offenen unteren Teil der Umschließung (211) rotierbar montiert ist, und ein scheibenförmiges Diffusorelement (222), das im Inneren des unteren Teils des Rotors (214) befestigt ist und das eine Vielzahl an Durchgangslöchern (223) sehr geringen Durchmessers umfasst, und dadurch, dass die Umschließung (211) an ihrem oberen Teil mit Wasser unter sehr hohem Druck versorgt wird, welcher Teil derart verschlossen ist, dass der Rotor (214) eine Turbine bildet, die das Diffusorelement (222) zur Rotation mit sehr hoher Geschwindigkeit antreibt, und dass das Wasser durch die Löcher (223) des Diffusorelementes (222) in Form von sehr feinen Hochdruckstrahlen ausgespritzt wird.

23. Vorrichtung gemäß Anspruch 22, **dadurch gekennzeichnet, dass** der Rotor (214) über ein Hydraulik-Lager (217) in der Umschließung (211) montiert ist.

24. Vorrichtung gemäß Anspruch 22, **dadurch gekennzeichnet, dass** die Innenwand des unteren Teils der Umschließung (211) und die Innenseite des Rotors (214) komplementäre ausgezackte Profile aufweisen, die einen Kanal (217) abgrenzen, der mit Wasser unter hohem Druck versorgt wird.

25. Vorrichtung gemäß irgendeinem der Ansprüche 22 bis 24, **dadurch gekennzeichnet, dass** die Schaufeln (219) des Rotors (214) einen löffelförmigen Teil umfassen.

26. Vorrichtung gemäß irgendeinem der Ansprüche 22 bis 25, **dadurch gekennzeichnet, dass** der Durchmesser der Löcher (223) des Diffusorelementes (222) unter 0,1 mm liegt.

27. Vorrichtung gemäß irgendeinem der Ansprüche 23 bis 26, **dadurch gekennzeichnet, dass** die Umschließung (211) zwei ringförmige Lippendichtungen in Kontakt mit dem Rotor (214) umfasst, die auf beiden Seiten des Hydraulik-Lagers (217) angeordnet sind.

28. Vorrichtung gemäß irgendeinem der Ansprüche 22 bis 27, **dadurch gekennzeichnet, dass** das Diffusorelement (222) abnehmbar, beispielsweise durch Verschraubung auf dem Rotor (214), befestigt ist.

29. Vorrichtung gemäß irgendeinem der Ansprüche 22 bis 28, **dadurch gekennzeichnet, dass** die Löcher (223) des Diffusorelementes (222) an ihrem inneren Ende erweitert sind.
